Europäisches Patentamt

European Patent Office

Office européen des brevets

(11) Numéro de publication : **0 420 736 B1**

(12) **FASCICULE DE BREVET EUROPEEN**

(45) Date de publication du fascicule du brevet :
**04.11.92 Bulletin 92/45**

(51) Int. Cl.⁵ : **F16D 23/12, F16D 27/00**

(21) Numéro de dépôt : **90402630.9**

(22) Date de dépôt : **25.09.90**

(54) **Timonerie de transmission de forces pour véhicules automobiles.**

(30) Priorité : **29.09.89 FR 8912747**

(43) Date de publication de la demande :
**03.04.91 Bulletin 91/14**

(45) Mention de la délivrance du brevet :
**04.11.92 Bulletin 92/45**

(84) Etats contractants désignés :
**DE ES FR GB IT**

(56) Documents cités :
**EP-A- 0 092 950
FR-A- 2 594 758
FR-A- 2 611 614
FR-A- 2 616 501
GB-A- 2 124 321**

(73) Titulaire : **VALEO**
**43, rue Bayen**
**F-75848 Paris Cédex 17 (FR)**

(72) Inventeur : **Focqueur, Hervé**
**6, Allée des Fonds de Fretay**
**F-95130 Franconville (FR)**
Inventeur : **Jumel, Bernard**
**4, rue Edmond Rousse**
**F-75014 Paris (FR)**

(74) Mandataire : **Gamonal, Didier**
**Société VALEO Service Propriété Industrielle**
**30, rue Blanqui**
**F-93406 Saint-Ouen Cédex (FR)**

## Description

La présente invention concerne les timoneries de transmission de forces pour véhicules automobiles propres à assurer une liaison entre un organe de commande et un organe de manoeuvre d'un dispositif débrayeur d'un embrayage, du genre comportant une partie mécanique.

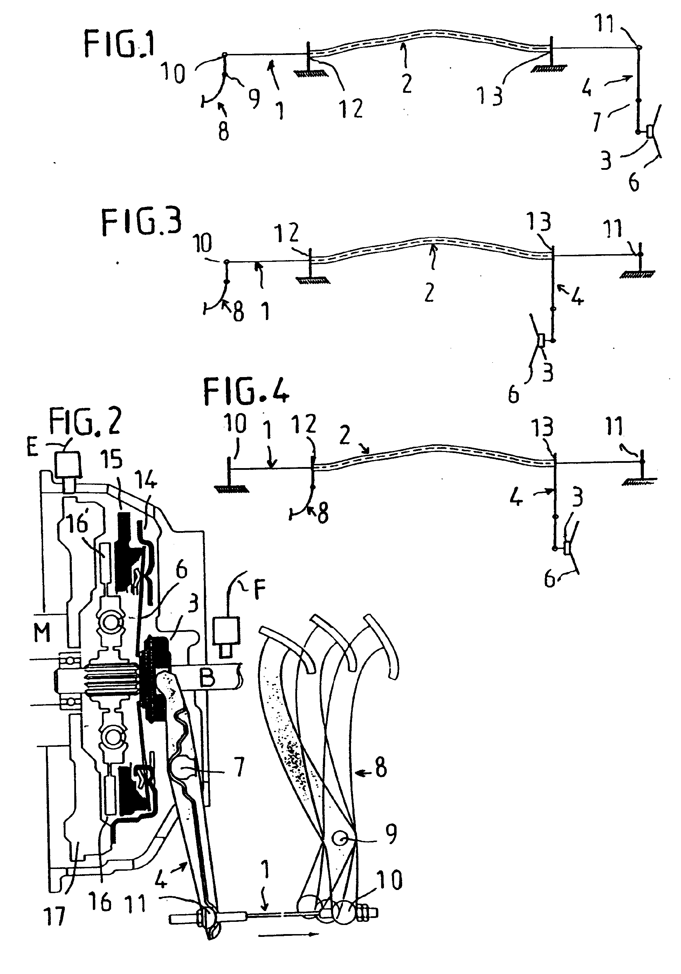

Usuellement (figures 1 et 2), la timonerie est dotée d'un câble 1 mobile axialement, d'une gaine 2 entourant ledit câble, et d'une fourchette 4 montée pivotante autour d'un point d'articulation 7, telle qu'une rotule solidaire d'une partie fixe du véhicule (figure 2) ou un axe tourillonnant et porté par une partie fixe du véhicule.

En variante le point d'articulation peut consister en des paliers, la fourchette portant alors des tétons tourillonnants dans lesdits paliers implantés, par exemple, dans le carter de la boîte de vitesses.

D'une manière générale le point d'articulation 7 constitue un point de guidage pour la timonerie.

L'organe de manoeuvre est une butée de débrayage 3 soumise à l'action d'une fourchette de débrayage 4 propre à agir sur le dispositif débrayeur d'un embrayage tel que les extrémités des doigts d'un diaphragme 6 ou des leviers de débrayage.

L'organe de commande 8 est le plus souvent une pédale de débrayage montée pivotante autour d'un point d'articulation 9 solidaire également d'une partie fixe du véhicule.

Le câble 1 est accroché à chacune de ses extrémités 10 et 11 à des points d'accrochage appartenant respectivement à la pédale 8 et à la fourchette 4, tandis que la gaine 2 est interposée entre deux points fixes 12 et 13 solidaires du véhicule.

Les points d'articulation ainsi que les points fixes constituent des points dénommés ci-après "points d'appui" pour la timonerie, qui peut comporter une partie hydraulique, par exemple entre la fourchette 4 et la butée 3. Ces points d'appui ont comme caractéristique d'être portés par une partie fixe du véhicule en étant solidaires de ladite partie ou montés tourillonnants par rapport à celle-ci.

Bien entendu, la présence de la fourchette 4 n'est pas obligatoire, le point 11 pouvant être attelé à un disque, comme décrit dans le brevet FR-A-1 587 732 ou un organe menant, comme décrit dans le document EP-A-0 322 265.

A la figure 1, en appuyant sur la pédale 8 on tire sur le câble 1, guidé par la gaine 2, pour manoeuvrer la fourchette 4.

Bien entendu, figure 3 le point 11 peut être fixe, tandis que le point 13 peut être mobile en étant attelé à la fourchette 4, une variation de position du point 10 entraînant une variation de position du point 13.

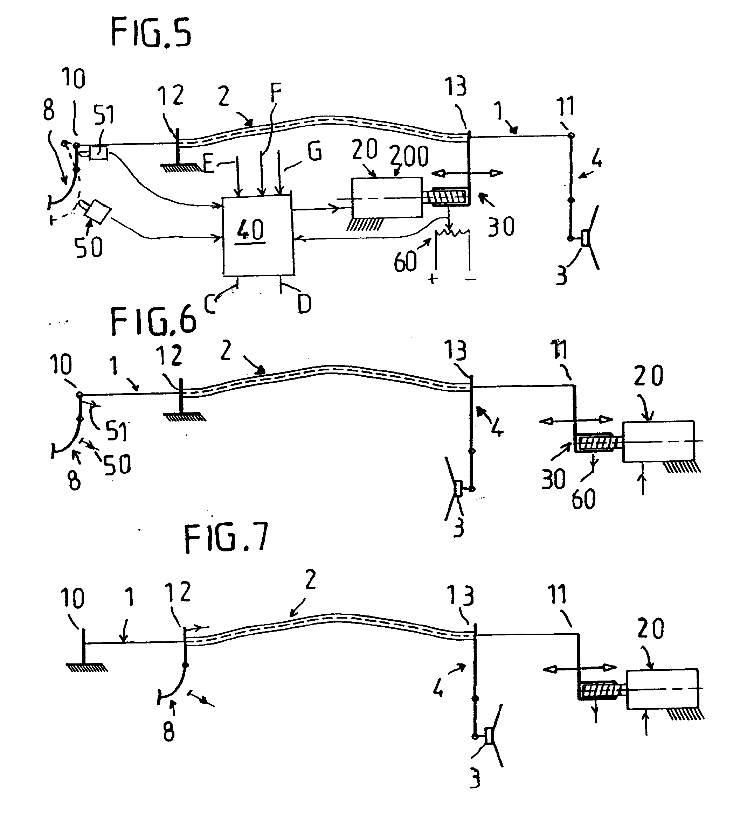

En variante (figure 4) les points 10 et 11 peuvent être fixes et les points 12 et 13 mobiles en étant attelés respectivement à la pédale 8 et à la fourchette 4, le câble 1 servant de guide à la gaine 2, qui est alors mobile axialement.

Dans tous les cas l'un des éléments gaine-câble constitue un élément de transmission de force, tandis que l'autre élément câble-gaine constitue un élément de guidage.

En variante, la timonerie peut comporter, comme élément de transmission de force en plusieurs parties, des tringles avec un système de renvoi et au moins un point d'articulation porté par une partie fixe du véhicule, ledit point d'articulation constituant un point de guidage pour la timonerie.

En pratique, la course de l'organe de commande 8 et de manoeuvre 3 se décompose en une course morte, en une course de modulation avec glissement et en une course finale pour un bon accouplement.

Par exemple (figure 2), dans le cas d'un embrayage classique à disque de friction 16, la course morte se produit entre la position de débrayage, disque de friction libéré, et une position intermédiaire, dite position d'accostage, dans laquelle les garnitures de friction 16' du disque 16 viennent lécher le plateau de pression 15.

La course de modulation se produit avec un glissement circonférentiel desdites garnitures 16' entre le plateau de réaction 17 et le plateau de pression 15 de l'embrayage et avec une transmission de couple de plus en plus complète jusqu'à une position d'accouplement complet, dit de couplage. La course finale permet un bon accouplement entre l'arbre menant M solidaire en rotation du moteur du véhicule et l'arbre mené B (l'arbre d'entrée de la boîte de vitesses).

Ainsi, la course de modulation est utile pour le confort du passager et pour les manoeuvres du véhicule, tandis que la course morte est nécessaire compte tenu des tolérances de fabrication des divers composants de l'embrayage ainsi que voilages, et notamment de la mise en cône du plateau de pression 15 sous l'effet des sollicitations thermiques dont il est l'objet.

Pour mémoire, on signalera que le plateau de pression 15 est solidaire en rotation d'un couvercle 14 en étant mobile axialement par rapport à celui-ci. Ledit couvercle 14 est propre à être rapporté sur le plateau de réaction 17, tandis que le diaphragme 6 s'appuie sur le couvercle 14 pour action sur le plateau de pression 15 et sollicitation de celui-ci en direction du plateau de réaction 17 pour serrage des garnitures de friction 16' entre lesdits plateaux 15 et 17. Le plateau 17 est solidaire de l'arbre menant M et le disque 16 est solidaire en rotation de l'arbre mené secondaire B.

On a déjà proposé, dans la demande FR-A-2 319 052, une disposition avec une poignée de commande dans laquelle la gaine et le câble sont coupés en deux parties entre lesquelles intervient un dispositif d'assistance comportant un moto-réducteur électrique. Ce dispositif permet d'assister le conducteur au moment des débrayages. Il en est de même dans le document FR-A-2 594 758.

Avec une telle disposition le conducteur n'a normalement pas la possibilité d'effectuer la course de modulation.

Dans le document FR-A-2 611 614, ayant les caractéristiques du préambule de la revendication 1, on a divulgué un dispositif de positionnement avec un élément de sortie, pour positionnement de l'embrayage, et deux éléments d'entrée dont l'un est déplaçable par l'intermédiaire d'un servo-entraînement de positionnement doté d'un servomoteur électrique, et l'autre déplaçable par l'intermédiaire d'un câble de traction relié à la pédale de débrayage.

En cas de panne du servo-entraînement l'embrayage peut être actionné en fonctionnement de secours. En fonctionnement normal le conducteur n'effectue pas les courses mortes et de modulation à l'aide de la partie mécanique.

On a également déjà proposé, dans le document FR-A-2 253 646, une disposition hydraulique permettant d'effectuer la course morte à l'aide d'une assistance.

Une telle disposition nécessite la présence d'une commande hydraulique.

La présente invention a pour objet de créer une nouvelle timonerie qui de manière simple et économique, tout en comportant une partie mécanique, permette d'effectuer une course morte tout en ayant la possibilité pour le conducteur d'effectuer la course de modulation et en procurant d'autres avantages.

Le problème est, selon l'invention, résolu par la partie caractéristique de la revendication 1.

Grâce à l'invention, il est possible d'effectuer principalement la course morte à l'aide des moyens de commande , le déplacement du point d'appui entraînant un déplacement de l'organe de commande.

On notera que le point d'appui, que l'on déplace directement ou indirectement, est un point de réaction associé à l'élément de guidage ou en variante un point de guidage.

Le conducteur peut effectuer manuellement la course de modulation ainsi qu'une faible partie de la course morte pour des raisons de sécurité en cas de panne des moyens de commande, grâce notamment à l'irréversibilité des moyens de commande.

On appréciera de manière économique et simple qu'un maximum de pièces d'une timonerie à organe de commande et de manoeuvre classiques est conservé, et que la timonerie peut se monter en lieu et place d'une timonerie classique de manière simple.

En outre par rapport à une transmission automatique telle que décrite dans le document FR-A-2 523 743, les moyens de commande sont simplifiés.

Pour déterminer les limites du déplacement du point d'appui mobile, on peut utiliser le calculateur programmé en conséquence pour émettre un signal de consigne pour les moyens moteurs ou des capteurs de positions détectant une position de fin de course pour ledit point d'appui.

De préférence, on utilise comme capteur de position du point d'appui mobile un potentiomètre, ce qui permet de n'utiliser qu'un seul capteur pour repérer les points limites de la course dudit point mobile dans un sens et dans l'autre.

On appréciera que l'invention permet de résoudre, à course sensiblement constante de l'organe de commande, deux exigences contradictoires, à savoir une augmentation de la course de modulation, sans diminution de la course morte et sans passer par un dispositif hydraulique.

Il devient également possible, grâce à un capteur de position libre détectant la position libre de l'organe de commande, ainsi qu'à des capteurs détectant des paramètres de fonctionnement de la transmission du véhicule allant du moteur aux roues de celui-ci, tel que le glissement du disque de friction et/ou des vitesses de rotation prédéterminées, suivant une caractéristique importante de l'invention, de faire intervenir les moyens moteurs pour faire patiner le disque de friction sans que le conducteur n'ait à intervenir sur la pédale. Un glissement contrôlé des garnitures de friction du disque entre les plateaux de pression et de réaction, est ainsi obtenu, ledit glissement permettant d'écrêter notamment les surcouples instantanés du moteur, ce qui améliore la durée de vie des organes de transmission, diminue les bruits et évite les à-coups au bénéfice du confort de l'usager.

En outre les erreurs de conduite du conducteur peuvent être rattrapées, par exemple, un embrayage trop brusque se traduisant par un patinage et des chocs moins violents.

On notera qu'une telle disposition est impossible avec un dispositif hydraulique selon le susmentionné document FR-A-2 253 646.

La présente invention permet donc également de moduler la course finale et de modulation à l'aide des moyens moteurs.

Suivant une autre caractéristique, la course définie de l'organe mobile peut être évolutive et il peut être adjoint à la timonerie un capteur d'usure détectant une traction dans la gaine ou le câble, de sorte qu'il est possible d'effectuer un rattrapage d'usure en déplaçant le point d'appui mobile jusqu'à un effort résiduel nul dans la timonerie, l'organe de commande étant alors en position libre.

On appréciera que l'élément de transmission de force n'est pas coupé et que d'une manière générale en cas de panne des moyens de commande, il est possible de débrayer, le conducteur n'effectuant alors qu'une faible partie de la course morte.

Les caractéristiques et avantages de l'invention ressortiront de la description qui va suivre, à titre d'exemple, en référence aux dessins annexés dans lesquels :

- la figure 1 est une vue schématique d'une timonerie de l'Art Antérieur pour une première variante de réalisation ;
- la figure 2 est une vue schématique d'un embrayage à friction associé à la timonerie de la figure 1 ;
- les figures 3 et 4 sont des vues analogues à la figure 1 pour d'autres variantes de réalisation ;
- la figure 5 est une vue schématique de la timonerie, analogue à la figure 1, pour un premier exemple de réalisation selon l'invention ;
- les figures 6 à 10 sont des vues analogues à la figure 5 pour d'autres variantes de réalisation, sans représentation du calculateur pour les figures 6 à 9 ;
- la figure 11 est une vue de face des moyens moteurs avec leur transmission irréversible associée pour un premier mode de réalisation ;
- la figure 12 est une vue selon la ligne I de la figure 11, le moteur électrique n'étant pas coupé ;
- les figures 13 et 14 sont des vues analogues aux figures 11 et 12 pour un second mode de réalisation.

Dans les figures 5 à 14, les éléments identiques à ceux décrits en référence aux figures 1 à 4 de l'Art Antérieur seront affectés du même signe de référence, les points d'appui étant des points portés par une partie fixe du véhicule automobile à moteur à combustion interne.

A la figure 5, on voit que la timonerie, selon l'invention, comporte un point d'appui 13 directement mobile dans les deux sens suivant une course définie entre deux positions limites et sous l'action de moyens de commande 200 irréversibles, comportant des moyens moteurs 20 et une transmission 30 intervenant entre lesdits moyens moteurs 20 et le point d'appui mobile 13. Des capteurs de position d'actionnement 50,60 sont associés respectivement à l'organe de commande 8 et au point d'appui mobile 13. Un calculateur électronique 40 est prévu, ledit calculateur recevant les informations desdits capteurs de position 50,60 pour commander lesdits moyens moteurs 20. Par enfoncement ou relâchement de l'organe de commande 8 par le conducteur et donc action de l'organe de commande 8 sur son capteur de position associé 50, le calculateur 40 pilote la mise en route des moyens moteurs 20 pour déplacement du point d'appui mobile (et donc de l'organe de manoeuvre 3) dans un premier sens ou dans un deuxième sens, d'une de ses positions limites à l'autre, suivant l'action exercée par le conducteur sur l'organe de commande 8, jusqu'à une position de fin de course. Ici, cette position est détectée par le capteur de position 60 associé au point d'appui mobile 13. Sous l'action de l'organe de commande 8 actionné manuellement par le conducteur, lorsque le capteur de position d'actionnement 50 associé audit organe 8 n'émet pas de signal capable, par l'intermédiaire du calculateur 40, d'engendrer la mise en route des moyens moteurs 20, le point d'appui mobile 13 reste fixe par l'intermédiaire des moyens de commande irréversibles 200.

La présence du capteur associé au point mobile n'est pas indispensable. En effet, le calculateur peut être programmé afin de générer un signal de consigne de position pour les moyens moteurs en réponse à un signal de commande produit par le capteur associé à l'organe de commande, en sorte de déplacer le point mobile d'une de ses positions limites à l'autre.

Par exemple, les moyens moteur peuvent consister en un moteur électrique à commande pas-à-pas, déplacer d'une position extrème, correspondant à l'une des positons limites du point mobile, à une autre position extrème, correspondant à l'autre position limite du point mobile, par un nombre déterminé d'impulsions de largeur prédéterminée générées par le calculateur en réponse au signal de commande du capteur associé.

La mémorisation des positions extrèmes, grâce à un capteur d'usure décrit ci-après, tient compte alors des usures, notamment des garnitures de friction, les impulsions étant évolutives en fonction des usures.

Dans tous les cas, une course du point mobile entraîne une course de l'organe de manoeuvre et la course morte est effectuée principalement par les moyens mobiles et la course de modulation par le conducteur qui, pour des raisons de sécurité, effectue une faible partie de la course morte.

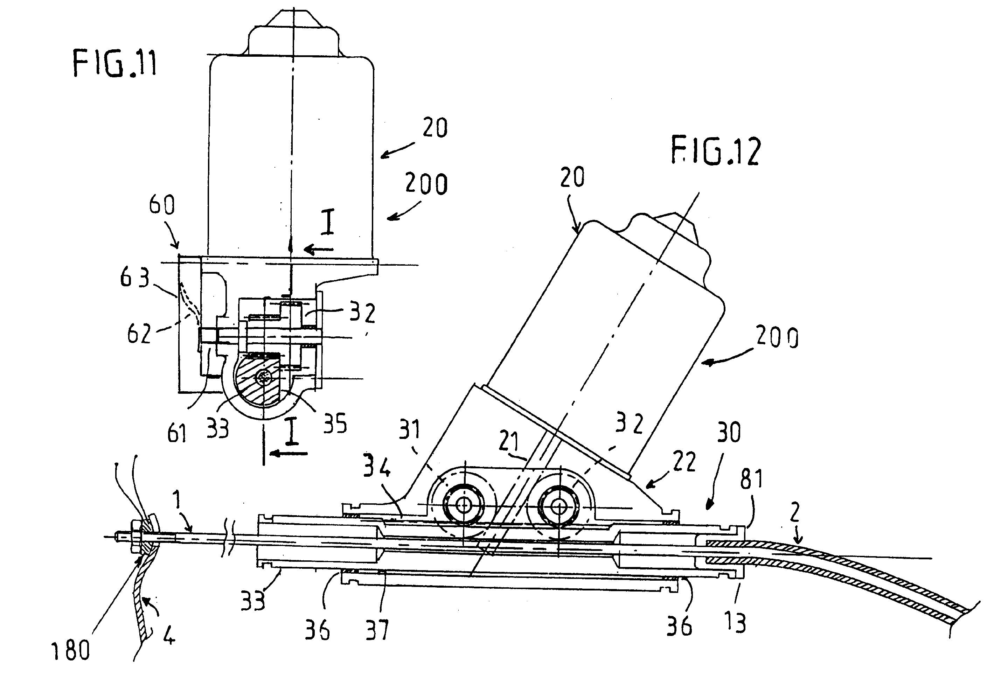

A la figure 5, comme dans les figures 11 à 14, c'est la transmission 30 qui est irréversible et c'est le point d'appui 13 associé à l'une des extrémités de la gaine 2 qui est mobile, le capteur de position d'actionnement 50 étant un switch détectant la position de fin de course de la pédale, tandis que le capteur 60 associé au point d'appui mobile 13 est un potentiomètre dont le point milieu est relié au calculateur 40. Ce calculateur 40 a des entrées C et D pour son alimentation et reçoit des signaux E,F,G provenant de capteurs (voir figure 2 pour les signaux E,F) mesurant ou détectant respectivement la vitesse de rotation du plateau de réaction 17 et donc de l'arbre menant M, la vitesse de rotation de l'arbre mené secondaire B, et un paramètre lié à l'accélération du véhicule, telle que la position du papillon du carburateur ou la pédale d'accélérateur. Ce calculateur 40 reçoit les signaux provenant des capteurs 50 et 60 ainsi que le signal provenant d'un capteur de position libre 51 détectant la position libre de la pédale 8 (pédale non actionnée par le conducteur). Ce capteur 51 peut être un switch ou un interrupteur.

Ainsi, lorsque le conducteur actionne manuellement la pédale 8, tant que le switch 50 n'est pas actionné par la pédale 8, une modulation du couple d'embrayage est possible manuellement, le disque de friction 16 passant alors progressivement de l'état engagé (garnitures 16' serrées entre les plateaux 15,17) à l'état libéré et vice-versa, tandis que le point 13 reste fixe grâce à l'irréversibilité de la transmission 30.

Lorsque le conducteur enfonce la pédale de débrayage 8, laquelle en fin de course actionne le switch 50 (pédale enfoncée), le calculateur 40 reçoit une information du capteur 50 et pilote la mise en route des moyens moteurs 20, lesquels entraînent un déplacement du point d'appui mobile 13 et de l'organe 3 dans un premier sens jusqu'à une première position extrême (ou limite) détéctée par le potentiomètre 60, pour effectuer la course morte de l'embrayage dans un premier sens. Le potentiomètre répère, de préférence, la positon d'un palpeur porté par la transmission des moyens de commande.

Lorsque le conducteur relâche alors son action sur la pédale, celle-ci remonte et le switch 50 retourne dans sa position initiale, ce qui est pris en compte par le calculateur 40 pour actionner les moyens moteurs en sens inverse et effectuer une course en sens inverse du point mobile 13, jusqu'à une deuxième position extrême (ou limite) détectée par le potentiomètre 60.

Par exemple, les moyens de commande 200 (figure 5) peuvent comporter un palpeur porté par une pièce entraînée par l'arbre de sortie des moyens moteur, ledit palpeur consistant en un curseur coopérant avec le potentiomètre 60, ledit palpeur étant adapté à arrêter les moyens moteur 20 lorsqu'il atteint l'une quelconque des deux bornes du potentiomètre 60, comme décrit dans le document FR-A-2530757.

Le point d'appui 13 est mobile ainsi dans les deux sens suivant une course définie entre deux positions limites déterminées par le potentiomètre 60 ou, en variante, par le calculateur.

Lorsque la pédale est en position relevée ou libre, le capteur 51 envoie une information au calculateur 40, lequel entraîne la mise en route des moyens moteurs 20 lorsque, par son entrée G associée à un capteur détectant une accélération du véhicule, tel qu'un capteur repérant la position du papillon du carburateur ou un accéléromètre, il détecte par exemple des variations d'accélération importantes, afin de desserrer et faire patiner l'embrayage (glissement des garnitures de friction 16′ entre les plateaux 15,17) pour, notamment, un bon confort de l'usager. Grâce aux capteurs E et F il devient possible, selon une cartographie pré-établie, de faire glisser l'embrayage (les garnitures 16′) dans une plage déterminée pour réduire les bruits.

D'une manière générale, grâce à des moyens de détection détectant au moins un paramètre de fonctionnement de la transmission du véhicule, on peut faire patiner l'embrayage et ici, grâce à l'ensemble des signaux E,F,G les fautes de conduite du conducteur peuvent être minimisées, celles-ci se traduisant par un patinage contrôlé de l'embrayage.

A la figure 6, c'est le point extrême 11 du câble 1 de guidage qui est mobile, et il en est de même à la figure 7 contrairement au mode de réalisation des figures 3 et 4.

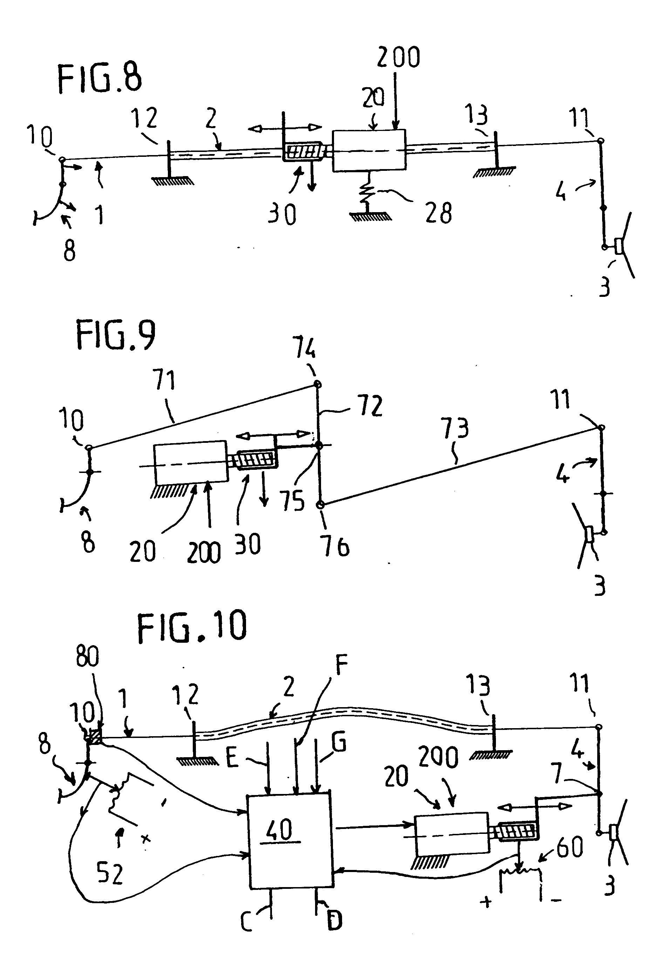

A la figure 8, la gaine 2 de guidage est coupée en deux entre les deux points d'appui fixes 12 et 13 et c'est ce point de coupure qui est mobile, sachant qu'une déformation de la gaine 2 entraîne une variation de position relative des points 10 et 11. Cette disposition revient à déplacer indirectement les points mobiles 12,13, car une mobilité du point de coupure entraîne de la même manière qu'à la figure 5 une variation des positions relatives des points 10,11, la seule différence étant que la gaine 2 de guidage est coupée, le câble de transmission de force demeurant intact.

Bien entendu le boîtier des moyens moteurs 20 est relié élastiquement par exemple par un ressort 28 à une partie fixe du véhicule pour permettre de suivre les variations de la gaine 2, ledit boîtier constituant avantageusement également un boîtier pour la transmission irréversible et donc pour les moyens de commande 200.

A la figure 9, la timonerie comporte des tringles 71,72,73 avec des points d'articulation 74,75,76 entre les extrémités 10 et 11 de la tringlerie, et c'est le point d'articulation 75, solidaire d'une partie fixe du véhicule et formant point de guidage pour la timonerie, qui est mobile. L'élément de transmission de force est donc ici constitué par des tringles, en étant en plusieurs parties.

A la figure 10, c'est le point d'articulation 7 de la fourchette 4, formant également point de guidage pour la timonerie, qui est mobile.

On notera que dans cette figure les deux capteurs 50 et 51 ont été remplacés par un potentiomètre 52 qui détecte les positions libre et d'enfoncement de la pédale 8.

On appréciera qu'un capteur d'usure 80 est associé au câble 1, celui-ci détectant l'effort de traction sur le câble lorsque les garnitures de friction 16′ s'usent. Ce capteur 80, disposé dans la timonerie, détecte la présence ou non d'un effort dans la timonerie.

A la figure 10 ledit capteur 80 est disposé au niveau de la pédale 8, tandis que dans la réalisation des figures 11 et 12, on voit que ledit capteur 180 est interposé entre l'extrémité supérieure de la fourchette 4 et un écrou de fixation du câble 1. Bien entendu, il peut détecter un effort sur la gaine, en étant associé au point 12 ou 13.

Bien que l'on puisse utiliser une jauge de contrainte comme capteur 80/180, de préférence ce capteur peut être sous la forme d'un switch associé à un ressort de rappel ou un bloc de caoutchouc portant des lames de contact. Par déformation on établit les contacts.

Pour mémoire, on rappellera que lorsque les garnitures de friction 16′ s'usent, l'épaisseur de celles-ci varie de sorte que le diaphragme 6, monté dans l'exemple de la figure 2 de manière pivotante sur le couvercle 14, la butée 3 agissant en poussée, s'incline et déplace la butée 3 laquelle, par action sur la fourchette 4, tire indirectement sur le câble 1. Lorsque la pédale 8 est libre, un ressort rappelant usuellement la pédale 8 dans cette direction, c'est cette traction supplémentaire d'usure qui est détectée par le capteur 80/180, lequel envoie une information au calculateur 40, qui pilote la mise en route des moyens moteurs 20 jusqu'à obtention d'un effort résiduel nul. Le calculateur peut effectuer cette opération lors de situations programmées, par exemple mise en route ou arrêt du moteur du véhicule.

On notera qu'en position libre la pédale 8 n'est pas actionnée par le conducteur.

Dans ces figures 11 et 12, les moyens moteurs 200 consistent en un moteur électrique et la transmission comporte des pignons intermédiaires 31,32 engrènant avec une vis sans fin 21 entraînée par le moteur électrique 20, comme décrit dans le document FR-A-2 372 998.

Cette vis sans fin comporte deux portions avec des pas de sens différent, chacune desdites portions engrènant avec l'un des pignons. Chaque pignon 31,32 est double et comporte une partie propre à engrener avec une crémaillère 34 ménagée dans un coulisseau 33.

Le moteur électrique 20 et la transmission irréversible 30, que constitue la vis sans fin 21 avec ses deux pignons 31,32 engrènant avec la crémaillère 34, sont logés dans un même boîtier 22, le coulisseau 33 étant mobile en translation et traversant un alésage 37 dudit boîtier 22 avec intervention de bagues de guidage 36. Les moyens de commande 200 forment donc un bloc.

Le câble 1 passe à l'intérieur du coulisseau 33. Ce coulisseau présente, à l'une de ses extrémités axiales, une coupelle 81 épaulée ou embout à section globalement en forme de U avec des extrémités radiales formant épaulement pour appui sur le boîtier 22. Cette coupelle reçoit l'extrémité de la gaine 2 en étant solidaire, par exemple, par emmanchement à force du coulisseau 33. En variante, elle peut être d'un seul tenant avec le coulisseau.

On notera que le coulisseau 33 est doté d'un méplat 35 pour passage des pignons 31 et 32.

Le pignon 32 a son axe prolongé en 61 pour entraînement d'un bras 62, formant le curseur d'un potentiomètre 60 logé dans un boîtier 63 solidaire du boîtier 22. Ainsi, lorsque le moteur électrique 20 est entraîné, la vis sans fin tourne dans un sens et entraîne les pignons 31, 32 qui, à leur tour, déplacent la crémaillère 34 et donc la coupelle 81 et la gaine 2, jusqu'à ce que le bras 62 atteigne une position extrême. Un mouvement en sens inverse est alors possible à partir de cette position, jusqu'à ce que le bras 62 atteigne la deuxième position extrême du potentiomètre 60.

Dans ce mode de réalisation, c'est le point 13 qui est mobile.

On notera que lorsque la pédale 8 tire sur le câble, la gaine 2 ne peut être entraînée, du fait de l'irréversibilité de la transmission 30 et de la non-alimentation du moteur 20. Par contre, le coulisseau 33 peut se déplacer dans les deux sens par l'intermédiaire du moteur électrique 20.

Par déplacement du point mobile, on fait varier la courbure de la gaine de guidage 2, ce qui a pour effet de faire pivoter la fourchette 4 et de déplacer l'organe de manoeuvre 3, le potentiomètre 60 détectant la fin de course du point 13, ce qui a pour effet d'envoyer un signal au calculateur 40, lequel arrête le moteur électrique 20, celui-ci n'étant plus alors alimenté. Au réembrayage le potentiomètre permet, au point d'appui mobile 13, de retrouver sa position initiale pour permettre la course de modulation par le conducteur. Cette position de fin et de début de course est mémorisée par le calculateur 40 à chaque rattrapage d'usure pour déplacer de manière évolutive les positions limites du point mobile 13. On peut également utiliser une disposition du type de celle décrite dans le susmentionné document FR-A-2530757.

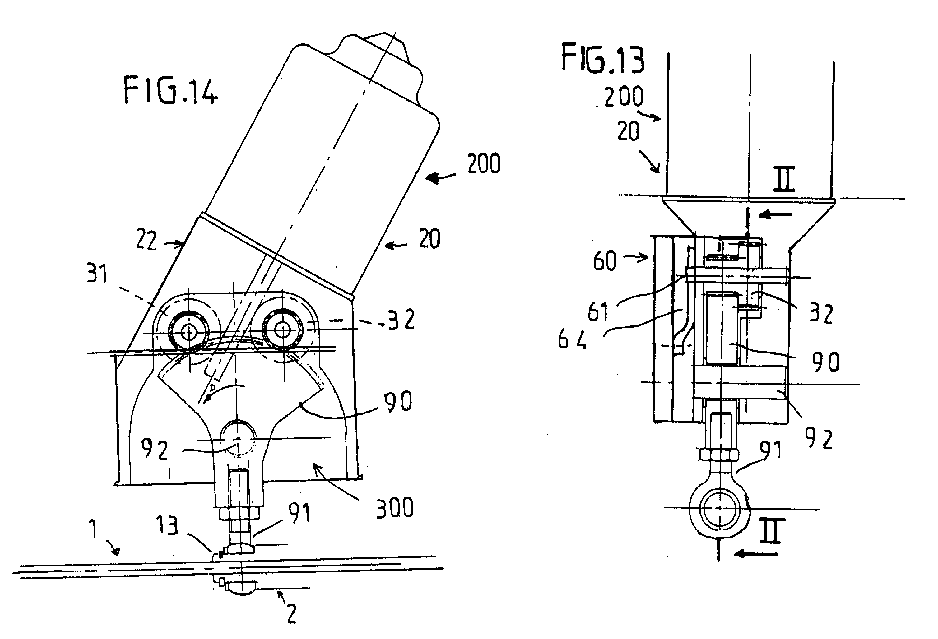

Dans les figures 13 et 14, les moyens moteurs 20 sont également électriques, mais la transmission 300 irréversible, au lieu de présenter une crémaillère 34 et un coulisseau 33, est dotée d'un secteur denté 90 engrènant avec les pignons 31,32 et montée autour d'un point d'articulation 92 solidaire du boîtier fixe 22.

Par rotation des pignons 31,32, le secteur 90 pivote, ce qui a pour effet de déplacer le point 13 rapporté par liaison du type à rotule 91 sur l'extrémité inférieure du secteur 90.

Ainsi qu'il ressort à l'évidence de la description, les moyens moteurs 20 et la transmission irréversible associée 30,300 forme des moyens de commande agissant sur la timonerie, tandis que le calculateur 40 et les différents capteurs 50,60 ; 51,52,80 forment des moyens de pilotage desdits moyens de commande.

Bien entendu, la présente invention n'est pas limitée aux exemples de réalisation décrits, mais englobe toutes variantes d'exécution, en particulier les moyens moteurs peuvent être du type hydraulique, le calculateur 40 pilotant alors une pompe électrique, laquelle fait varier la pression à l'intérieur d'une chambre définie par un cylindre et un piston, ce qui a pour effet de déplacer le piston, et donc un point mobile de la timonerie.

De même, la transmission irréversible peut comporter un moteur électrique doté d'une vis engrènant avec une démultiplication à engrenages dotée de pignons, l'un des pignons de l'engrenage comportant une rainure en spirale, dans laquelle pénètre un têton solidaire de l'une des extrémités d'un levier pivotant, dont l'autre extrémité comporte également un têton en prise avec le filetage d'une pièce mobile montée dans un alésage du boîtier.

Par rotation du moteur, on fait pivoter le levier, lequel entraîne ladite pièce mobile, portant l'un des points d'appui de la timonerie, par exemple l'une des extrémités de la gaine 2, ladite pièce étant traversée par le câble 1.

Les moyens moteurs en variante peuvent être irréversibles, grâce à la présence de champs magnétiques ou grâce à un frein associé par exemple à l'arbre de sortie du moteur.

Bien entendu, comme mentionné ci-dessus, la présence d'une fourchette n'est pas indispensable dans la timonerie, et celle-ci peut comporter une partie hydraulique.

Par exemple à la figure 9 le point 11 peut être lié à un disque monté tourillonnant sur une partie fixe du véhicule, ledit disque appartenant à un système bielle-manivelle entraînant une bielle attelée au piston d'un cylindre émetteur relié par une canalisation à un cylindre récepteur actionnant la fourchette de débrayage.

L'organe de commande peut être une manette ou poignée, par exemple pour motos à la disposition du conducteur.

Les points 10 et 12 peuvent être mobiles. Par exemple à la figure 5 il suffit de déplacer le point 12 au lieu du point 13 et à la figure 7 de déplacer le point 10 au lieu du point 11.

Le potentiomètre 60 peut être remplacé par deux switchs respectivement de début et de fin de course. Au lieu d'un potentiomètre, on peut utiliser une partie rotative entraînée par les moyens moteur pour ouvrir et fermer des contacts et arrêter les moyens moteurs.

Le moteur électrique peut tourner dans un seul sens et son arbre de sortie ou axe 21 peut être relié mécaniquement par une démultiplication à engrenage irréversible, dotée de pignons, à un entraîneur coopérant avec un ergot transversal porté par un coulisseau, ledit entraîneur comportant deux saillies périphériques sensiblement en forme de section d'hélice, qui sont inclinées en sens inverse par rapport à l'axe 2 de l'entraîneur, lesdites saillies étant en outre décalées axialement et angulairement l'une par rapport à l'autre.

Bien entendu dans les figures 6 et 7 le capteur 80 peut détecter un effort supplémentaire sur la gaine en étant associé, soit au point 12, soit au point 13 et dans les figures 5,8 et 9, le capteur peut être associé au point 10 ou 11.

Bien que le capteur 80 peut détecter indirectement l'usure en étant associé à l'élément de guidage, de préférence ce capteur, pour une meilleure détection, est associé à l'élément de transmission de force.

Le rattrapage d'usure n'est pas forcément associé à la transmission irréversible 30,300.

Enfin, par exemple dans les figures 6 et 7 on peut rendre indirectement mobile le point 11 (ou le point 10) en coupant le câble 1 en deux et en déplaçant le point de coupure de manière analogue à la figure 8, étant entendu que dans tous les cas l'un seulement des éléments câble 1-gaine 2 est coupé, le boîtier 22 étant suspendu élastiquement, comme dans la figure 8.

Dans tous les cas on coupe l'élément de guidage, tandis que l'élément de transmission de force reste intact.

## Revendications

1) Timonerie de transmission de forces pour véhicules automobiles, propre à assurer une liaison entre un organe de commande (8) et un organe de manoeuvre (3) d'un dispositif débrayeur d'un embrayage, du genre comportant des moyens moteurs (20) et une partie mécanique avec un élément de transmission de force en au moins une partie et des points d'appui (7,11,12,13,75) portés par une partie fixe du véhicule automobile, caractérisée en ce que l'un desdits points d'appui (7,11,12,13,75) de la timonerie est directement ou indirectement mobile dans les deux sens suivant une course définie entre deux positions limites et sous l'action de moyens de commande (200) irréversibles comportant les moyens moteurs (20) et une transmission (30,300) intervenant entre lesdits moyens moteurs (20) et ledit point d'appui mobile, en ce que au moins un capteur de position d'actionnement (50,52) est associé à l'organe de commande (8), en ce qu'un calculateur (40) est prévu, ledit calculateur (40) recevant les informations dudit capteur de position pour commander lesdits moyens moteurs (20), de sorte que par enfoncement ou relâchement de l'organe de commande (8) par le conducteur et action de l'organe de commande (8) sur son capteur de position associé (50,51,52), le calculateur (40), en réponse à l'information dudit capteur de position (50,52), pilote la mise en route des moyens moteurs (20) pour déplacement dudit point d'appui mobile d'une desdites positions limites à l'autre dans un premier sens ou dans un deuxième sens, suivant l'action exercée par le conducteur sur l'organe de commande (8), jusqu'à une position de fin de course, et que ledit point d'appui mobile est fixe par l'intermédiaire des moyens de commande irréversibles (200), lorsque, d'une part, le conducteur actionne manuellement l'organe de commande (8) et, d'autre part, le capteur de position d'actionnnement (50,51,52), n'émet pas de signal capable, par l'intermédiaire du calculateur (40), d'engendrer la mise en route des moyens moteurs (20).

2) Timonerie selon la revendication 1, caractérisée en ce que le calculateur (40) reçoit des informations d'au moins un capteur de position (60) associé audit point mobile (7,11,12,13,75) et prévu pour détecter une position extrême de fin de course dudit point d'appui mobile, lorsqu'il est déplacé par les moyens moteurs (20) mis en route par l'intermédiaire dudit calculateur (40) et dudit capteur de position (50,52) associé à l'organe de commande (8).

3) Timonerie selon la revendication 2, caractérisée en ce que le capteur de position (60) associé au point d'appui mobile (7,11,12,13,75) est un potentiomètre, en sorte que ledit point d'appui est mobile dans les deux sens entre deux positions extrêmes limites déterminées par le potentiomètre (60).

4) Timonerie selon l'une quelconque des revendications précédentes, dans laquelle ladite timonerie est associée à un embrayage à friction comportant un disque de friction (16) avec des garnitures de friction (16′) propres à être serrées entre le plateau de pression (18) et le plateau de réaction (17), que comporte ledit embrayage à friction, caractérisée en ce qu'un capteur de position libre (51,52) est associé à l'organe de commande (8) pour détecter sa position libre lorsque celui-ci n'est pas actionné par le conducteur, et en ce que des capteurs supplémentaires sont prévus pour détecter des paramètres de fonctionnement de la transmission du véhicule automobile tel que la vitesse de rotation d'un arbre menant et d'un arbre mené associés à l'embrayage à friction ou une accélération du véhicule, en sorte que pour ladite position libre de l'organe de commande (8) ledit capteur de position libre (51,52) envoie un signal au calculateur, lequel sous l'influence du signal d'au moins un desdits capteurs supplémentaires actionne lesdits moyens moteurs (20) pour faire patiner l'embrayage.

5) Timonerie selon l'une quelconque des revendications 1 à 4, caractérisée en ce qu'il est associé un capteur d'usure (80) pour détecter une traction supplémentaire d'usure dans la timonerie, lorsque l'organe de commande (8) est en position libre, de sorte que ledit capteur (80) envoie un signal au calculateur (40) lorsqu'une telle dite contrainte est présente, pour mettre en route lesdits moyens moteurs (20) et déplacer le point d'appui mobile, en sorte de réaliser un rattrapage d'usure.

6) Timonerie selon l'une quelconque des revendications précédentes, caractérisée en ce que les moyens moteurs (20) comportent un moteur électrique avec une vis sans fin (21) engrenant avec des pignons (31,32) d'une transmission irréversible (30,300).

7) Timonerie selon la revendication 6, caractérisée en ce que les pignons (31,32) engrènent avec une crémaillère (34) pratiquée dans un coulisseau (33) mobile axialement par rapport à un boîtier (22) à la faveur d'un alésage (37) que présente ledit boîtier (22).

8) Timonerie selon la revendication 6, caractérisée en ce que les pignons (31,32) engrènent avec un secteur denté (90) monté pivotant par rapport au boîtier.

9) Timonerie selon l'une quelconque des revendications précédentes, caractérisée en ce que les moyens moteurs (20) sont irréversibles.

10) Timonerie selon l'une quelconque des revendications précédentes, du genre comportant un câble (1) et une gaine (2), ledit câble ayant deux points d'extrémités (10,11) et traversant la gaine (2), caractérisée en ce que le point d'appui mobile (11) est le point d'extrémité du câble (1) opposé à celui associé à l'organe de commande (8).

11) Timonerie selon l'une quelconque des revendications précédentes, du genre comportant un câble (1) et une gaine (2) interposés entre deux points (12,13) portés par une partie fixe du véhicule, ledit câble (1) traversant ladite gaine (2), caractérisée en ce que le point d'appui mobile est l'un des points associé à l'extrémité de la gaine (2).

12) Timonerie selon l'une quelconque des revendications précédentes, caractérisée en ce que l'organe de commande est une pédale, et l'organe de manoeuvre une butée de débrayage (3) actionnée par une fourchette de débrayage (4).

## Patentansprüche

1) Gestänge zur Kraftübertragung für Kraftfahrzeuge, geeignet zur Herstellung einer Verbindung zwischen einem Bedienungsorgan (8) und einem Betätigungsorgan (3) einer Kupplungsausrückvorrichtung, enthaltend Antriebsmittel (20) und einen mechanischen Teil mit einem Kraftübertragungselement in wenigstens einem Teil sowie Auflagepunkte (7, 11, 12, 13, 75), die auf einem feststehenden Teil des Kraftfahrzeugs ruhen, **dadurch gekennzeichnet**, daß einer der genannten Auflagepunkte (7, 11, 12, 13, 75) des Gestänges direkt oder indirekt in beiden Richtungen auf einer Strecke beweglich ist, die zwischen zwei Endstellungen begrenzt ist, und unter Einwirkung von irreversiblen Betätigungsmitteln (200), die die Antriebsmittel (20) und eine Kraftübertragung (30, 300) enthalten, welche zwischen den genannten Antriebsmitteln (20) und dem genannten beweglichen Auflagepunkt eingreift, daß wenigstens ein Betätigungsweggeber (50, 52) dem Bedienungsorgan (8) zugeordnet ist, daß ein Rechner (40) vorgesehen ist, wobei der genannte Rechner (40) die Informationen vom genannten Weggeber empfängt, um die genannten Antriebsmittel (20) zu steuern, so daß durch Ein- oder Ausrückung des Bedienungsorgans (8) durch den Fahrer und Einwirkung des Bedienungsorgans (8) auf den zugehörigen Weggeber (50, 51, 52) der Rechner (40) als Reaktion auf die Information vom genannten Weggeber (50, 52) die Ingangsetzung der Antriebsmittel (20) steuert, um die Verschiebung des genannten beweglichen Auflagepunkts aus einer der genannten Endstellungen in die andere Stellung in einer ersten Richtung oder in einer zweiten Richtung zu bewirken, entsprechend der Betätigung des Bedienungsorgans (8) durch den Fahrer, und zwar bis in eine Endlage, und daß der genannte bewegliche Auflagepunkt durch irreversible Betätigungsmittel (200) festliegt, wenn einerseits der Fahrer das Bedienungsorgan (8) betätigt und andererseits der Betätigungsweggeber (50, 51, 52) nicht das Signal aussendet, welches in der Lage ist, mit Hilfe des Rechners (40) die Ingangsetzung der Antriebsmittel (20) zu bewirken.

2) Gestänge nach Anspruch 1, **dadurch gekennzeichnet**, daß der Rechner (40) Informationen von wenigstens einem Weggeber (60) erhält, der dem genannten beweglichen Punkt (7, 11, 12, 13, 75) zugeordnet ist und dazu dient, eine äußerste Endstellung des genannten beweglichen Auflagepunkts zu erfassen, wenn er durch die Antriebsmittel (20) verschoben wird, die mit Hilfe des genannten Rechners (40) und des genannten, dem Bedienungsorgan (8) zugeordneten Weggebers (50, 52) betätigt werden.

3) Gestänge nach Anspruch 2, **dadurch gekennzeichnet**, daß der dem beweglichen Auflagepunkt (7, 11, 12, 13, 75) zugeordnete Weggeber (60) ein Potentiometer ist, so daß der genannte Auflagepunkt in beiden Richtungen zwischen zwei äußeren Endstellungen beweglich ist, die durch das Potentiometer (60) festgelegt werden.

4) Gestänge nach einem der vorherigen Ansprüche, worin das genannte Gestänge einer Reibungskupplung zugeordnet ist, die eine Kupplungsscheibe (16) mit Reibbelägen (16') enthält, welche zwischen der Druckplatte (18) und dem Schwungrad (17) eingeklemmt werden können, die an der genannten Reibungskupplung vorgesehen sind, **dadurch gekennzeichnet**, daß dem Bedienungsorgan (8) ein Weggeber (51, 52) zugeordnet ist, um während der Nichtbetätigung durch den Fahrer dessen freie Position zu erfassen, und daß zusätzliche Geber zur Erfassung der Funktionsparameter der Kraftübertragung des Kraftfahrzeugs vorgesehen sind, wie zum Beispiel der Drehzahl einer mit der Reibungskupplung verbundenen Antriebs- und einer Abtriebswelle oder einer Beschleunigung des Fahrzeugs, so daß der genannte Weggeber (51, 52) für die genannten freie Position des Bedienungsorgans (8) an den Rechner ein Signal sendet, der unter dem Einfluß des Signals von wenigstens einem der genannten zusätzlichen Geber die genannten Antriebsmittel (20) betätigt, um so die Kupplung rutschen zu lassen.

5) Gestänge nach einem der Ansprüche 1 bis 4, **dadurch gekennzeichnet**, daß dieses einem Verschleißgeber (80) zugeordnet ist, um eine zusätzliche Verschleißzugkraft im Gestänge zu erfassen, wenn sich das Bedienungsorgan (8) in freier Position befindet, so daß der genannte Geber (80) an den Rechner (40) ein Signal sendet, wenn eine solche Beanspruchung vorliegt, um die genannten Antriebsmittel (20) in Gang zu setzen und den beweglichen Auflagepunkt in der Weise zu verschieben, daß ein Ausgleich des Verschleißes erzielt wird.

6) Gestänge nach einem der vorherigen Ansprüche, **dadurch gekennzeichnet**, daß die Antriebsmittel (20) einen Elektromotor mit Schnecke (21) enthalten, die mit den Ritzeln (31, 32) einer irreversiblen Kraftübertragung (30, 300) in Eingriff tritt.

7) Gestänge nach Anspruch 6, **dadurch gekennzeichnet**, daß die Ritzel (31, 32) mit einer Zahnstange (34) in Eingriff treten, welche in einem Gleitstück (33) angebracht ist, das im Verhältnis zu einem Gehäuse (22) durch eine im genannten Gehäuse (22) vorgesehene Bohrung (37) axial bewegt werden kann.

8) Gestänge nach Anspruch 6, **dadurch gekennzeichnet**, daß die Ritzel (31, 32) mit einem Zahnsegment (90) in Eingriff treten, welches im Verhältnis zum Gehäuse drehbar eingebaut ist.

9) Gestänge nach einem der vorherigen Ansprüche, **dadurch gekennzeichnet**, daß die Antriebsmittel (20) irreversibel sind.

10) Gestänge nach einem der vorherigen Ansprüche, enthaltend ein Kabel (1) und eine Tülle (2), wobei das genannte Kabel zwei Endpunkte (10, 11) besitzt und durch die Tülle (2) hindurch verläuft, **dadurch gekennzeichnet**, daß der bewegliche Auflagepunkt (11) der Endpunkt des Kabels (1) ist, der dem zum Bedienungsorgan (8) gehörenden entgegengesetzt ist.

11) Gestänge nach einem der vorherigen Ansprüche, enthaltend ein Kabel (1) und eine Tülle (2), die zwischen zwei Punkte (12, 13) eingesetzt sind, welche auf einem festen Teil des Fahrzeugs aufliegen, wobei das genannte Kabel (1) durch die genannte Tülle (2) hindurch verläuft, **dadurch gekennzeichnet**, daß der bewegliche Auflagepunkt einer der Punkte ist, die zum Ende der Tülle (2) gehören.

12) Gestänge nach einem der vorherigen Ansprüche, **dadurch gekennzeichnet**, daß das Bedienungsorgan ein Pedal und das Betätigungsorgan ein Ausrücklager (3) ist, welches von einer Ausrückgabel (4) betätigt wird.

## Claims

1. A force transmission linkage for motor vehicles, for coupling together a control member (8) and a manoeuvring member (3) of a declutching means for a clutch, and being of the kind comprising motor means (20) together with a mechanical part, having a force transmission element in at least one piece and application points (7, 11, 12, 13, 75) carried by a fixed part of the motor vehicle, characterised in that one of the said application points (7, 11, 12, 13, 75) of the linkage is directly or indirectly movable in both directions in a course of travel defined between two limit positions and under the action of irreversible control means (200) comprising the motor means (20) and a transmission means (30, 300) acting between the said motor means (20) and the said movable application point, in that at least one actuation position sensor (50, 52) is associated with the control member (8), in that a computer (40) is provided, with the said computer (40) receiving the information signals from the said position sensor so as to control the said motor means (20), in such a way that, by actuation or release of the control member (8) by the driver, with the control member (8) acting on its associated position sensor (50, 51, 52), the computer (40), in response to the information signal from the said position sensor (50, 52), causes the motor means (20) to operate so as to displace the said movable application point from one of the said limit positions to the other, in a first direction or in a second direction according to the action exerted by the driver on the control member (8), up to an end-of-travel position, and in such a way also that the said movable application point is fixed by means of the irreversible control means (200), firstly when the driver actuates the control member (8) manually, and secondly when the actuation position sensor (50, 51, 52) does not issue any signal capable of causing, through the computer (40), the operation of the motor means (20).

2. A linkage according to Claim 1, characterised in that the computer (40) receives information signals from at least one position sensor (60) which is associated with the said movable point (7, 11, 12, 13, 75) and which is arranged to detect an extreme end of travel position in the displacement of the said movable application point by the motor means (20) when the latter is activated by means of the said computer (40) and the said position sensor (50, 52) associated with the control member (8).

3. A linkage according to Claim 2, characterised in that the position sensor (60) associated with the movable application point (7, 11, 12, 13, 75) is a potentiometer, such that the said application point is movable in both directions between two extreme limit positions determined by the potentiometer (60).

4. A linkage according to any one of the preceding Claims, in which the said linkage is associated with a friction clutch comprising a friction disc (16) having friction liners (16') adapted to be gripped between the pressure plate (18) and the reaction plate (17) which form part of the said friction clutch, characterised in that a free position sensor (51, 52) is associated with the control member (8) for detecting its free position when the latter is not actuated by the driver, and in that supplementary sensors are provided for detecting operating parameters of the transmission of the motor vehicle, such as the rotational velocity of a driving shaft and of a driven shaft associated with the friction clutch, or acceleration of the vehicle, whereby, in the said free position of the control member (8), the said free position sensor (51, 52) transmits a signal to the computer, which, under the influence of the signal from at least one of the said supplementary sensors, actuates the said motor means (20) so as to cause the clutch to be engaged.

5. A linkage according to any one of Claims 1 to 4, characterised in that a wear sensor (80) is associated with it for detecting an additional pull due to wear in the linkage when the control member (8) is in a free position, whereby the said sensor (80) transmits a signal to the computer (40) when a said stress is present, so as to cause the said motor means (20) to operate and to displace the movable application point, whereby to cause wear to be taken up.

6. A linkage according to any one of the preceding Claims, characterised in that the motor means (20) comprise an electric motor having a worm (21) meshing with worm wheels (31, 32) of an irreversible transmission means (30, 300).

7. A linkage according to Claim 6, characterised in that the worm wheels (31, 32) mesh with a rack (34) formed in a sliding member (33), which is movable axially with respect to a housing (22) in a bore (37) of the said housing (22).

8. A linkage according to Claim 6, characterised in that the worm wheels (31, 32) mesh with a toothed sector (90), which is mounted for pivoting movement with respect to the housing.

9. A linkage according to any one of the preceding Claims, characterised in that the motor means (20) are irreversible.

10. A linkage according to any one of the preceding Claims, of the kind including a cable (1) and a sheath (2), the said cable having two end points (10, 11) and passing through the sheath (2), characterised in that the movable application point (11) is the end point of the cable (1) remote from that which is associated with the control member (8).

11. A linkage according to any one of the preceding Claims, of the kind including a cable (1) and a sheath (2), both of which are interposed between two points (12, 13) carried by a fixed part of the vehicle, with the said cable (1) passing through the said sheath (2), characterised in that the movable application point is one of the points associated with the end of the sheath (2).

12. A linkage according to any one of the preceding Claims, characterised in that the control member is a pedal, and the manoeuvring member is a clutch release bearing (3) actuated by a declutching fork (4).

FIG.1

FIG.3

FIG.4

FIG.2

FIG.5

FIG.6

FIG.7

EP 0 420 736 B1

FIG.8

FIG.9

FIG.10

14

EP 0 420 736 B1

FIG.11

FIG.12

15

FIG.14

FIG.13